# EUROPEAN PATENT APPLICATION

(11) **EP 0 944 121 A1**
(43) Date of publication of application: **22.09.1999**
(21) Application number: 99200836.7
(22) Date of filing: 18.03.1999
(51) Int. Cl.: H01M 2/10

(54) **Removal/attachement device for use with compact electronic device**

(30) Priority: 19.03.1998 JP 8954498
(71) Applicant: SMK CO., LTD., Tokyo 142 (JP)
(72) Inventor: Matsuda, Takeshi, c/o SMK Co., Ltd., Tokyo (JP)
(74) Representative: Quintelier, Claude

(57) **Abstract**

There is described a removal/attachment device for use with a compact electronic device (10). The removal/attachment device which includes a slider (24) movably attached to an electronic device main unit (11) and a lock release button (38) provided so as to be movable in the direction crossing the direction in which a slider travels, the removal/attachment device further including a lock protuberance (49) which is integrally formed with the electronic device main unit, an operation knob (18) attached to the slider, and a lock claw (48) which engages or disengages from the lock protuberance and a spring section (41) which expands and contracts in the direction in which the lock release button, both of which are integrally formed with the lock release button.

## Description

### BACKGROUND OF THE INVENTION

### Field of the Invention:

The present invention relates to a removal/attachment device for use with a compact electronic device which permits removable attachment of a compact electronic device, such as a battery, to an electronic device main unit; e.g., which permits removable attachment of a battery to a battery holder of an electronic camera or a video camera or removable attachment of an electronic camera and a video camera to a player.

### Description of the Related Art:

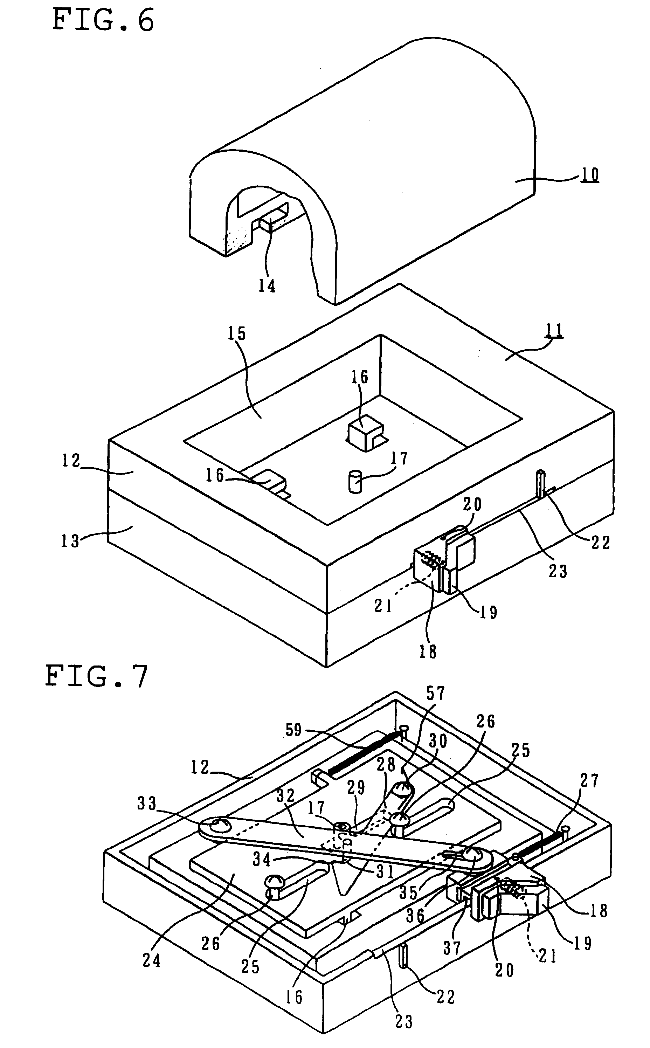

As shown in FIGs. 6 and 7, when a compact electronic device, e.g., a battery 10, is attached to, e.g., a battery holder 11, the battery 10 is fitted from above to a battery attachment section 15 of the battery holder 11. The bottom of the battery 10 presses a sensor pin 17, and lock recesses 14 formed in the battery 10 engage fixed hooks 16 of the battery holder 11.

The battery holder 11 comprises an upper case 12 and a lower case 13. As shown in the reverse side of the upper case 12 shown in FIG. 7, when the sensor pin 17 is pressed, a lock arm 28 pivots around a pin 30, which serves as a fulcrum, by the force of a spring 57, and an engagement recess 31 engages a lock pin 34 of a pivotal arm 32. When a slidable member 37 is slid along a slit 23 against the restoration force of a coil spring 27 through use of an operation knob 18 in the foregoing state, the pivotal arm 32 pivots around a pin 33, because the slidable member 37 and the pivotal arm 32 are connected together by means of a pin 36 and an elongated hole 35. As a result, a slider 24 is slid by way of the lock arm 28 against the restoration force of the coil spring 59. At this time, the sensor pin 17 is loosely fitted into an elongated clearance hole 29, and the slider 24 travels together with the fixed hooks 16 that are integrally formed with the slider 24. When the fixed hook 16 travels, the upper end of each of the fixed hooks 16 engages the corresponding lock recess 14 of the battery 10, thereby attaching the battery 10 to the battery holder 11.

When the pivotal arm 32 pivots around the pin 33 by means of the operation knob 18 while the pin 33 functions as a fulcrum, a lock section (not shown) which is provided in the area of the lock button 19 facing the upper case 12 engages a lock rib 22 and comes to stop, because the lock button 19 is rotatively forced by means of a pin 20 and a spring 21.

The battery 10 is connected to an unillustrated terminal provided on the battery holder 11. In a case where the compact electronic device 10 is an electronic camera, the electronic camera is connected to a connector which is actuated in association with the slider 24.

To remove the battery 10 from the battery holder 11, the user presses the projecting edge of the operation knob 18 against the restoration force of the spring 21. The lock button 19 is then pivoted around the pin 20, the unillustrated internal lock section is disengaged from the lock rib 22, and the coil spring 27 brings the slidable member 37 and the pivotal arm 38 to their original positions. Simultaneously, the slider 24 is brought into its original position by means of the coil spring 59. As a result, the fixed hooks 16 are disengaged from the lock recesses 14, and the battery 10 can be removed from the battery attachment section 15 of the battery holder 11.

The conventional removal/attachment device having the foregoing configuration requires a considerably large number of parts. More specifically, even in the case of the illustrated example, sliding the slider 24 requires four springs, i.e., the spring 21, the coil spring 27, the spring 57, and the coil spring 59. More smooth movement of the slider entails an increase in the number of springs. Further, at least more than ten screws and pins are required by the conventional device, and many complicated components, such as the lock arm 28, the pivotal arm 32, and the operation knob 18, are also used in the device.

For these reasons, assembly of parts and the number of assembly processes incur much expense, thereby rendering a removal/attachment device expensive, requiring troublesome adjustment precise operation, and rendering the device easy to break.

The object of the present invention is to provide a removal/attachment device which requires fewer parts and enables reliable locking and simple removal of a compact electronic device.

### Summary of the Invention

Accordingly, according to a first aspect of the present invention, there is provided a removal/attachment device which removably holds a compact electronic device on an electronic device main unit by means of fixed hooks and lock recesses and which includes a slider that is movably attached to the electronic device main unit and a lock release button provided so as to be movable in a direction crossing the direction in which the slider travels, the removal/attachment device comprising:
a lock protuberance which is integrally formed with the electronic device main unit;
an operation knob attached to the slider; and
a lock claw which engages or disengages from the lock protuberance and a spring section which expands and contracts in the direction in which the lock release button, both of which are integrally formed with the lock release button.

The lock release button fits into a through hole of the operation knob so as to be able to advance or recede, and the spring section is formed from an S-shaped molded spring. The electronic device main unit comprises an upper case and a lower case, and the slider and the lock release button are housed while the upper case and the lower case are fitted together. Between the upper and lower cases is provided a guide pin which doubles as a guide for guiding the movement of the slider while fitting into an elongated hole and as a rib for connecting together the upper and lower cases.

When the compact electronic device is fitted from above to the electronic device main unit, fixed hooks are movably fitted into lock recesses. When the slider is slid in this condition, the lock release button is also slid along with the slider, so that the fixed hooks are engaged with the lock recesses to thereby attach the compact electronic device to the electronic device main unit. At this time, the lock pawl is locked by the lock protuberance.

To remove the compact electronic device, the user presses the lock release button is pressed against the restoration force of the spring section, thereby disengaging the lock pawl from the lock protuberance. When the slider is slid in the direction opposite that in which it had been slid while the lock release button is pressed, the fixed hooks are disengaged from the lock recesses, thus enabling removal of the compact electronic device from the electronic device main unit.

### Brief Description of the Drawings

FIG. 1 is a rear view showing a removal/attachment device for use with a compact electronic device according to one embodiment of the present invention and the removal/attachment device which is made by assembly of an upper case, a slider, and a lock release button and is in a locked state;
FIG. 2 is a cross-sectional view taken along line A-A shown in FIG. 1;
FIG. 3 is a perspective view showing a compact electronic device and an electronic device main unit;
FIG. 4 is an exploded perspective view showing a slider, a lock release button, and a lower case according to the present invention;
FIG. 5 is an exploded perspective view of a lock release button, a slider, and an upper case when viewed from the bottom;
FIG. 6 is a perspective view showing a battery and a conventional battery holder; and
FIG. 7 is a perspective view showing the upper case shown in FIG. 6 when it is viewed from the bottom.

### Description of the Preferred Embodiment

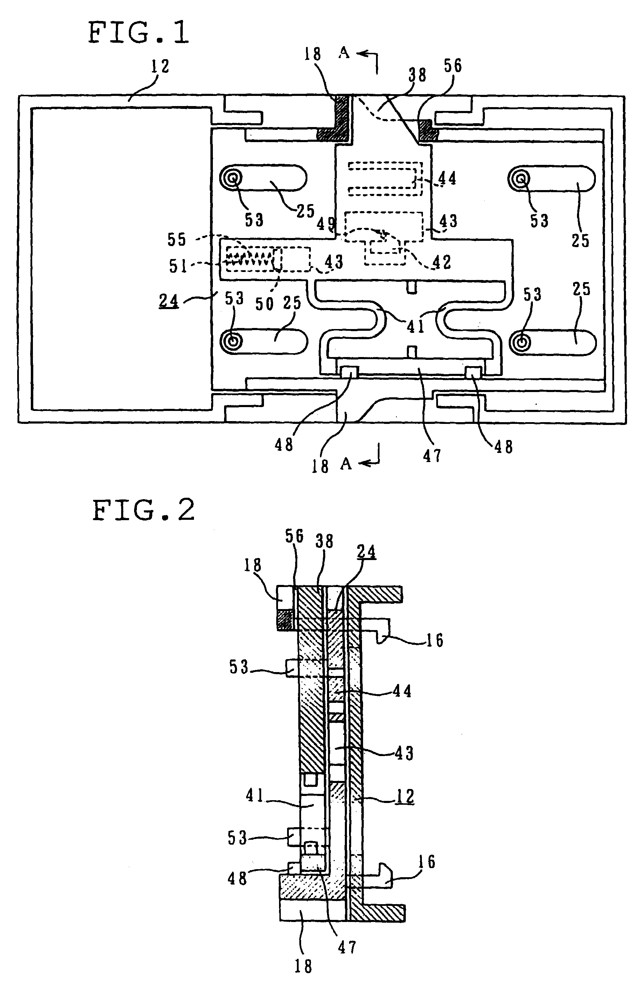

A preferred embodiment will be described by reference to FIGs. 1 through 5.

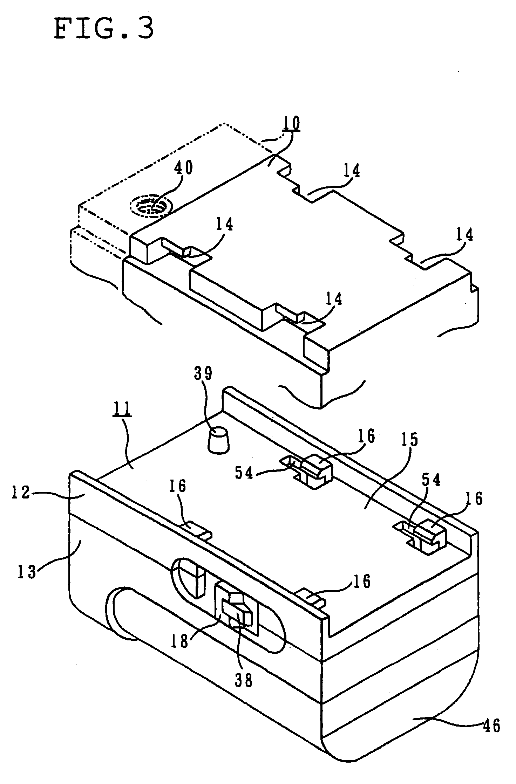

In FIG. 3, reference numeral 10 designates a compact electronic device. In the following description, a removably attachable battery is taken as an example of the compact electronic device 10.

A pair of lock recesses 14 are integrally formed on each side of the bottom surface of the battery 10. If the compact electronic device 10 corresponds to a camera, a tripod screw hole 40 is formed in the bottom of the device.

In FIG. 3, reference numeral 11 designates an electronic device main unit. In the following description, a battery holder which permits removable attachment of the battery 10 is taken as an example of the electronic device main unit 11. The battery holder 11 is formed by assembling the upper case 12 and the lower case 13 and superimposing one on the other. A battery 46 is further removably attached to the lower case 13. In other words, the electronic device main unit 11 corresponds to so-called a double battery and is integrally attached to the end of an electronic camera or a video camera.

A pair of fixed hook travel holes 54 are formed in, and along each side of, a battery attachment section 15 of the battery holder 11 which serves as a compact electronic device attachment section, in such a way as to correspond to the lock recesses 14. The internal fixed hooks 16 protrude from the fixed hook travel holes 54. In the case of the compact electronic device 10 corresponding to a camera, a positioning pin 39 is formed in the battery attachment section 15 for the purpose of positioning the compact electronic device 10 by utilization of the tripod screw hole 40. The operation knob 18 for sliding the slider 24, which will be described later, is provided in the outer surface on each side of the battery holder 11, and the lock release button 38 is fitted to the knob 18.

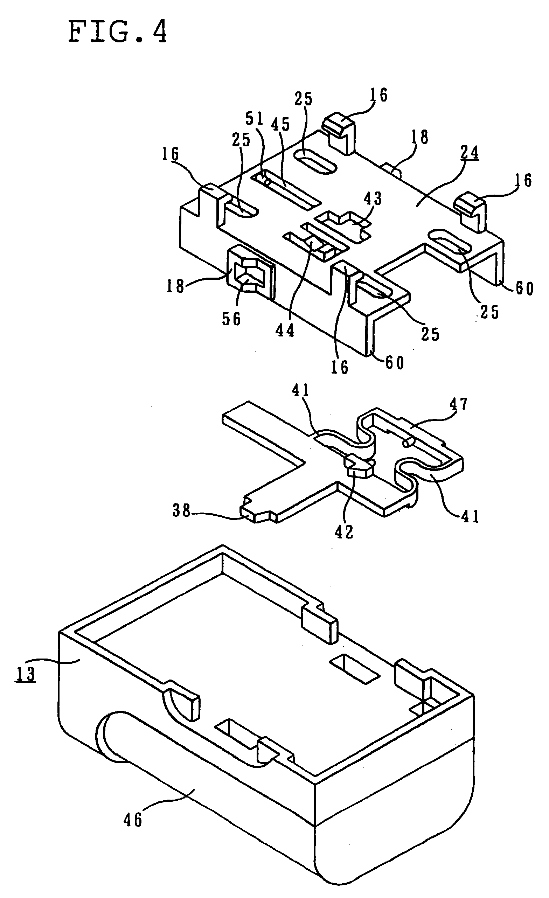

FIG. 4 is an exploded perspective view showing the inside of the electronic device main unit, or the battery holder, 11 while the upper case 12 shown in FIG. 3 is removed.

Reference numeral 24 provided in FIG. 4 designates a slider, and the lock release button 38 is fitted into the slider 24 from the bottom surface side thereof. A pair of fixed hooks 16 are formed on each side of the slider 24 so as to protrude upward. The operation knob 18 is provided on a side plate 60 on each side of the slider 24, and a through hole 56?along which the lock release button 38 to be described later travels back and forth?is formed in one of the operation knobs 18.

An elongated guide hole 25 is formed in the plane portion of the slider 24 in the vicinity of each of the four corners of the slider. In the center of the plane portion of the slider 24 are formed a lock claw clearance hole 43 and a coil spring attachment elongated hole 45. Further, a click spring 44 notched into a rectangular C-shaped form is formed in the vicinity of the center of the plane portion. Further, an engagement section 51 to which a coil spring 55 fits is integrally formed with the coil spring attachment elongated hole 45.

The lock release button 38 loosely fits into and travels back and forth along the through hole 56 of the operation knob 18. Two S-shaped springs 41 are integrally formed with the end of the lock release button 38 by means of molding. The open ends of the springs 41 are connected together by means of a spring end section 47, and a lock claw 42 having a tapered portion and a lock portion is integrally formed on the upper surface of the lock release button 38.

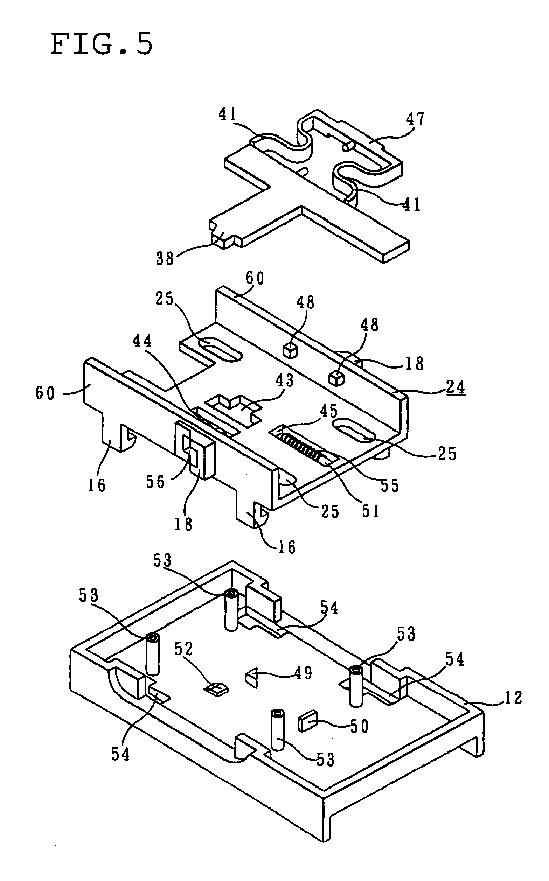

FIG. 5 shows the upper case 12 shown in FIG. 3 and the slider 24 and the lock release button 38 shown in FIG. 4 while they are turned upside down.

Nothing is particularly formed on the upper surface of the lock release button 38. In other respects, the configuration of the lock release button 38 is as previously described in connection with FIG. 4.

Lock claws 48 to which is fixed the spring end section 47 are formed integrally with the interior side of one of the side plates 60. In other respects, the slider 24 is as previously described in connection with FIG. 4.

The fixed hook travel holes 54 that have been described in connection with FIG. 3 are formed in the vicinity of the four respective corners of the upper case 12. The guide pins 53 that loosely fit into the elongated holes 25 of the slider 24 and guide the sliding action of the slider 24 are integrally formed with the upper case 12 in the vicinity of the fixed hook travel holes 54. The guide pins 53 double as assembly ribs for integrally connecting together the upper and lower cases 12 and 13 shown in FIG. 4.

In substantially the center of the upper case 12 are there integrally formed a coil spring receiving protuberance 50 which loosely fits into the coil spring attachment elongated hole 45 of the slider 24 and which fixedly holds the other end of the coil spring 55; a lock protuberance 49 which loosely fits into the lock claw clearance hole 43 of the slider 24 and engages or disengages from the lock claw 42 of the lock release button 38; and the click protuberance 52 which faces the click spring 44 of the slider 24.

Assembly of the foregoing components will now be described.

In FIG. 5, the fixed hooks 16 of the slider 24 are loosely fitted into the fixed hook travel holes 54 of the upper case 12, and the coil spring receiving protuberance 50 is fitted into the coil spring attachment elongated hole 45. The lock protuberance 49 is fitted into the lock claw clearance hole 43. In this state, one end of the coil spring 55 is fitted into the spring engagement section 51, and the other end of the coil spring 55 is fixed to the coil spring receiving protuberance 50.

Next, the lock release button 38 is fitted into the through hole 56 of the slider 24 from the inside, and the spring end section 47 is engaged with the lock claw 48 while the spring sections 41 are compressed.

The lower case 13 not having the battery 46 attached thereto is superimposed on the upper case 12, and screws are inserted into the guide pins 53 of the upper case 12 from the lower case 13, thereby integrally assembling the upper case 12 and the lower case 13 into the battery holder 11. FIG. 3 shows the thus-assembled battery holder 11 while it is turned upside down.

The battery 10 is fitted to the battery attachment section 15 of the thus-assembled battery holder 11 from above, so that the fixed hooks 16 are loosely fitted into the lock recesses 14 of the battery 10. When the operation knobs 18 are slid against the restoration force of the coil spring 55 in this state, the slider 24 slides integrally along with the lock release button 38, whereby the fixed hooks 16 are engaged with the lock recesses 15 of the battery 10. At this time, the lock claw 42 integrally formed with the lock release button 38 also travels; however, the movement of the lock claw 42 is hindered by the lock protuberance 49. The lock protuberance 49 and the lock claw 42 respectively have tapered portions, and the spring sections 41 are integrally formed with the lock release button 38. Therefore, the spring sections 41 are compressed such that the lock claw 42 escapes from the lock protuberance 49. After having passed across the lock protuberance 49, the lock claw 42 is returned to its original position by means of the spring sections 41, thereby bringing the operation knobs 18 in a locked state. The upper case in a locked state is shown in FIG. 1.

To remove the battery 10, the user presses the lock release button 38 into the through hole 56 against the restoration force of the spring sections 41. The lock claw 42 integrated with the lock release button 38 is disengaged from the lock protuberance 49, and the lock release button 38 is slid in the direction opposite that in which it had been slid, together with the operation knobs 18, which are held in a pressed state. The fixed hooks 16 integrally formed with the slider 24 can be disengaged from the lock recesses 14, thus enabling the battery 10 to be removed from the battery holder 11.

Although the foregoing embodiment has been described in connection with a case where the compact electronic device 10 corresponds to a battery and the electronic device main unit 11 corresponds to a battery holder, the present invention is not limited to this embodiment. For example, the compact electronic device 10 may correspond to an electronic camera or a video camera, and the electronic device main unit 11 may correspond to a player. The present invention may apply to the compact electronic device 10 and the overall accessories thereof.

According to the first aspect of the present invention, there is provided a removal/attachment device which includes a slider movably attached to an electronic device main unit and a lock release button provided so as to be movable in the direction crossing the direction in which a slider travels, the removal/attachment device comprising:
a lock protuberance which is integrally formed with the electronic device main unit;
an operation knob attached to the slider; and
a lock claw which engages or disengages from the lock protuberance and a spring section which expands and contracts in the direction in which the lock release button, both of which are integrally formed with the lock release button. By means of the foregoing configuration, the removal/attachment device requires only three components; namely, the electronic device main unit, the slider, and the lock release button. Thus, the components of the removal/attachment device according to the present invention can be considerably reduced in number as compared with the case of the conventional removal/attachment device. Further, the removal/attachment device according to the present invention is readily assembled. Accordingly, an inexpensive removal/attachment device can be offered, and the removal/attachment device operates reliably without involvement of adjustment.

According to a second aspect of the present invention, the lock release button fits into a through hole of the operation knob so as to be able to advance or recede, and the spring section is formed from an S-shaped molded spring and hence can withstand the forward and backward movement of the lock release button for a long period of time.

According to a third aspect of the present invention, the electronic device main unit comprises an upper case and a lower case, and the slider and the lock release button are housed while the upper case and the lower case are fitted together. Between the upper and lower cases is provided a guide pin which doubles as a guide for guiding the movement of the slider while fitting into an elongated hole and as a rib for connecting together the upper and lower cases. The foregoing configuration ensures the sliding action of the slider, which can contribute to a drastic reduction in the number of components such as pins and screws.

## Claims

1. A removal/attachment device which removably holds a compact electronic device on an electronic device main unit by means of fixed hooks and lock recesses and which includes a slider that is movably attached to the electronic device main unit and a lock release button provided so as to be movable in the direction crossing the direction in which the slider travels, the removal/attachment device comprising:
a lock protuberance which is integrally formed with the electronic device main unit;
an operation knob attached to the slider; and
a lock claw which engages or disengages from the lock protuberance and a spring section which expands and contracts in the direction in which the lock release button, both of which are integrally formed with the lock release button.

2. The removal/attachment device as defined in Claim 1, wherein the lock release button fits into a through hole of the operation knob so as to be able to advance or recede, and the spring section is formed from an S-shaped molded spring.

3. The removal/attachment device as defined in Claim 1 or 2, wherein the electronic device main unit comprises an upper case and a lower case, and the slider and the lock release button are housed while the upper case and the lower case are fitted together, and between the upper and lower cases is provided a guide pin which doubles as a guide for guiding the movement of the slider while fitting into an elongated hole and as a rib for connecting together the upper and lower cases.
